# EUROPÄISCHE PATENTSCHRIFT

(11) **EP 3 538 703 B1**
(45) Veröffentlichungstag und Bekanntmachung des Hinweises auf die Patenterteilung: **06.01.2021**
(21) Anmeldenummer: 17790752.4
(22) Anmeldetag: 24.10.2017
(51) Int. Cl.: D06F 39/00, A47L 15/42, G01J 3/02

(54) **SPEKTROMETER, SYSTEM ENTHALTEND EIN SPEKTROMETER UND EIN HAUSHALTSGERÄT UND VERFAHREN ZU DEREN BETRIEB**
SPECTROMETER, SYSTEM CONTAINING A SPECTROMETER AND A DOMESTIC APPLIANCE, AND METHOD FOR THE OPERATION THEREOF
SPECTROMÈTRE, SYSTÈME COMPORTANT UN SPECTROMÈTRE ET UN APPAREIL ÉLECTROMÉNAGER AINSI QUE SON PROCÉDÉ DE FONCTIONNEMENT

(30) Priorität: 14.11.2016 DE 102016222253
(43) Veröffentlichungstag der Anmeldung: 18.09.2019
(73) Patentinhaber: BSH Hausgeräte GmbH, 81739 München (DE)
(72) Erfinder: NEUMAIER, Philipp, 10247 Berlin (DE)
(86) Internationale Anmeldenummer: PCT/EP2017/077122
(87) Internationale Veröffentlichungsnummer: WO 2018/086871

(56) Entgegenhaltungen:
- DE-A1-102010 028 354
- DE-A1-102012 217 975
- DE-B3-102004 030 029
- DE-U1-202008 003 977
- US-A1- 2013 044 321
- US-A1- 2014 259 448
- US-A1- 2015 293 067

## Beschreibung

Die Erfindung betrifft ein Spektrometer, umfassend ein Gehäuse, das mindestens eine Strahlungsquelle, mindestens einen Strahlungsdetektor, und eine autarke Energieversorgungseinheit umgibt, sowie ein System zur qualitativen und/oder quantitativen Erfassung von chemischen Substanzen in einem Haushaltsgerät, umfassend ein Spektrometer und mindestens ein Haushaltsgerät. Die Erfindung betrifft außerdem Verfahren zum Betrieb des Spektrometers sowie des Systems zur qualitativen und/oder quantitativen Erfassung von chemischen Substanzen in einem Haushaltsgerät.

Bei der Verwendung von Haushaltsgeräten spielen im Allgemeinen eine Vielzahl unterschiedlichster Parameter eine Rolle, wobei die Art und die Bedeutung der Parameter sehr von der Art des Haushaltsgerätes abhängen. Die Kenntnis und Überwachung solcher Parameter ist wichtig für einen optimalen Betrieb eines Haushaltsgerätes.

In Haushaltsgeräten zur Lagerung, Verarbeitung und/oder Zubereitung von Lebensmitteln sind vor allem hygienische Aspekte, wie etwa Schimmelbildung oder die Ausbildung eines Biofilms, wichtig. Biofilme entstehen insbesondere durch Kontamination mit Lebensmittelresten an schwer zugänglichen Bereichen solcher Haushaltsgeräte. Die Ausbildung von Biofilmen oder eine Schimmelbelastung äußert sich dabei vor allem durch schlechten oder muffigen Geruch, welcher durch die Emission flüchtiger organischer Substanzen hervorgerufen wird. Auch in wasserführenden Haushaltsgeräten wie Waschmaschinen, Trocknern oder Geschirrspülmaschinen stellt die Ausbildung von Biofilmen ein Problem dar.

Insbesondere aber auch für die Durchführung von Behandlungsprogrammen in Haushaltsgeräten ist es wichtig, möglichst viele Daten über die zu behandelnden Gegenstände und den Verlauf des jeweiligen Behandlungsprogramms zu erfassen. Nur so kann ein Behandlungsprogramm von Beginn an optimal durchgeführt und bei Bedarf an die vorliegenden Bedingungen angepasst werden.

Haushaltsgeräte mit Spektrometern sind in den oben genannten Zusammenhängen bereits bekannt. Ein Nachteil der im Stand der Technik bekannten Lösungen ist jedoch, dass Spektrometer im Allgemeinen fest in ein Haushaltsgerät eingebaut sind. Der Anwendungsbereich der eingesetzten Spektrometer ist daher beschränkt. Zusätzlich muss häufig auch ein Kompromiss zwischen der Güte eines Messsignals und dem zur Verfügung stehenden Bauraum gefunden werden, so dass eine optimale Verwendung des Spektrometers häufig nicht erfolgen kann.

Wünschenswert wäre es daher, ein Spektrometer bereitzustellen, dessen Verwendung im Zusammenhang mit einem Haushaltsgerät flexibler ist. Vorzugsweise sollte auch eine Verwendung außerhalb eines Haushaltsgeräts möglich sein. Überdies wäre es wünschenswert, wenn ein solches Spektrometer nicht auf die Verwendung mit einem einzelnen Haushaltsgerät beschränkt wäre.

Haushaltsgeräte mit einer verbesserten Steuerbarkeit sind bereits bekannt.

Die Veröffentlichung DE 10 2012 217 975 A1 beschreibt ein Haushaltsgerät mit einer Steuereinrichtung zum Steuern von Betriebsprozessen des Haushaltsgeräts, und mit einer batterielosen elektronischen Sensoreinheit zum Erfassen zumindest eines Betriebsparameters des Haushaltsgeräts, wobei die Sensoreinheit einen Generator zum Bereitstellen elektrischer Energie für die Sensoreinheit aus nicht-elektrischer Energie sowie einen Sender aufweist, der zum drahtlosen Übertragen eines den zumindest einen Betriebsparameter charakterisierenden Funksignals an die Steuereinrichtung ausgebildet ist, wobei der Generator ein thermoelektrischer Generator mit zwei thermischen Kontaktflächen ist, der zum Bereitstellen der elektrischen Energie aufgrund einer Temperaturdifferenz (ΔT) zwischen den Kontaktflächen ausgebildet ist.

Die Veröffentlichung DE 10 2013 223 820 A1 beschreibt eine Überwachungseinheit für ein Haushaltsgerät, mit einem Bewegungssensor, welcher dazu eingerichtet ist, eine Bewegung der Überwachungseinheit zu detektieren, wobei die Überwachungseinheit ein Befestigungsmittel aufweist, um sie an einer äußeren Oberfläche des Haushaltsgeräts derart zu befestigen, dass mittels des Bewegungssensors eine Bewegung des Haushaltsgerätes detektierbar ist.

Die Veröffentlichung WO 2007/004 173 A1 beschreibt ein Textilbehandlungsgerät umfassend: ein Gehäuse mit mindestens einem Reservoir, welches eingerichtet ist, eine Nutzzusammensetzung zu beinhalten; ein Energieharvestingsystem, das eingerichtet ist, mechanische oder thermische Energie in elektrische Energie umzuwandeln; eine Energiespeichervorrichtung, die eingerichtet ist, elektrische Energie des Energieharvestingsystems zu speichern; ein System zum Handling von Flüssigkeiten, das eingerichtet ist, Nutzzusammensetzung von dem Reservoir zu Textilien zu transportieren in einem Textiltrocknungsgerät; und eine Steuereinheit, die eingerichtet ist, das Dosieren von Nutzzusammensetzung von dem Gerät zu steuern.

Die Veröffentlichung WO 2004/053 220 A1 beschreibt ein Verfahren zur Identifikation eines Textilparameters eines verschmutzten Textilartikels, der der Behandlung bedarf, wobei das Verfahren umfasst: Bestrahlen der Oberfläche eines verschmutzten Textilartikels mit elektromagnetischer Strahlung umfassend einen spektralen Bereich, der geeignet ist, spektrale Probendaten für einen anschließenden Vergleich zu erzeugen; Sammeln von Probendaten von der Oberfläche des Textilartikels, und Identifizieren des Textilparameters durch einen Vergleich eines Probensets an spektralen Daten mit spektralen von Referenztextilmaterial erhaltenen Referenzdaten, wobei das Probenset an spektralen Daten einen spektralen Bereich umfasst mit einer Breite von mindestens 400 nm und der spektrale Bereich die Wellenlängen von 783 nm bis 1183 nm umfasst.

Die Veröffentlichung DE 10 2010 028 354 A1 beschreibt ein Dosiersystem, das vorgesehen ist, im Inneren des rotierenden Behandlungsraums eines wasserführenden Haushaltsgeräts positioniert zu werden, mit Sensoren, einer elektrischen Energiequelle und einer Schnittstelle zur drahtlosen Datenübertragung.

Vor diesem Hintergrund war es Aufgabe der vorliegenden Erfindung, ein im Zusammenhang mit einem Haushaltsgerät flexibler einsetzbares Spektrometer bereitzustellen, das vorzugsweise einen verbesserten Betrieb des Haushaltsgerätes ermöglicht. Wünschenswert wäre dabei, dass die Erfassung von betriebsrelevanten Daten vereinfacht werden könnte.

Die Lösung dieser Aufgabe wird nach dieser Erfindung erreicht durch ein Spektrometer, ein System enthaltend dieses Spektrometer und ein Haushaltsgerät, ein Verfahren zum Betrieb des Spektrometers, sowie ein Verfahren zum Betrieb des Systems mit den Merkmalen der entsprechenden unabhängigen Patentansprüche. Bevorzugte Ausführungsformen des erfindungsgemäßen Spektrometers, des erfindungsgemäßen Systems sowie der erfindungsgemäßen Verfahren sind in den jeweiligen abhängigen Patentansprüchen aufgeführt. Bevorzugten Ausführungsformen des erfindungsgemäßen Spektrometers entsprechen bevorzugte Ausführungsformen des erfindungsgemäßen Systems sowie der Verfahren und umgekehrt, auch wenn dies hierin nicht explizit festgestellt ist.

Gegenstand der Erfindung ist somit ein Spektrometer, umfassend ein Gehäuse, das mindestens eine Strahlungsquelle, mindestens einen Strahlungsdetektor, und eine autarke Energieversorgungseinheit umgibt, wobei es eine Schnittstelle zur drahtlosen Datenübertragung enthält und das Spektrometer eingerichtet ist, um
(a) vom Strahlungsdetektor erhaltene Daten zur detektierten Strahlung in einer internen Auswerteeinheit und/oder einer externen Auswerteeinheit auszuwerten, und
(b) drahtlos direkt oder indirekt mit mindestens einem Haushaltsgerät zu kommunizieren.

Die vom Strahlungsdetektor erhaltenen Daten zur detektierten Strahlung können Rohdaten oder ggf. schon aufbereitete Rohdaten sein. Der hierin verwendete Begriff "Auswerteeinheit" bezieht sich daher im Allgemeinen auf eine Auswerteeinheit, welche eine Auswertung in Hinblick auf die qualitative und/oder quantitative Erfassung von chemischen Substanzen ergibt. Der Begriff "Substanzen" ist hierin breit auszulegen und umfasst beispielsweise niedermolekulare und hochmolekulare organische chemische Substanzen, aber auch anorganische Substanzen. Der Begriff "Substanz" umfasst daher beispielsweise das Material von Wäschestücken wie auch möglicherweise in den Wäschestücken enthaltenes Wasser.

Das Gehäuse kann eine beliebige Form aufweisen, solange die mindestens eine Strahlungsquelle, der mindestens eine Strahlungsdetektor, die autarke Energieversorgung und gegebenenfalls eine Auswerteeinheit innerhalb des Gehäuses angeordnet werden können, und die vorgesehene Verwendung im Zusammenhang mit einem Haushaltsgerät möglich ist. Erfindungsgemäß hat das Gehäuse eines Spektrometers, das in der Trommel eines wasserführenden Haushaltsgerätes eingesetzt wird, eine möglichst regelmäßige Oberfläche, um Bewegungen in einer Trommel mitmachen zu können.

Beispiele für Formen des erfindungsgemäßen Gehäuses mit einer möglichst regelmäßigen Oberfläche sind runde Formen wie Kugeln und sonstige Ellipsoide. Dabei umfasst der Begriff Ellipsoide sowohl Referenzellipsoide als auch Rotationsellipsoide. Darüber hinaus sind erfindungsgemäß auch regelmäßige Polyeder sowie Mischformen zwischen runden Formen und regelmäßigen Polyedern möglich. Ein Beispiel für eine solche Mischform ist ein Körper, der sich durch Entfernung einer Kugelkappe von einer Kugel gebildet denken lässt, also ein Körper, der bis auf eine ebene Kreisfläche ansonsten eine kugelförmige Oberfläche aufweist.

Regelmäßige Polyeder sind insbesondere archimedische, catalanische, platonische Polyeder oder Prismen und Antiprismen.

Hierbei wird die Form des Gehäuses häufig von Körpern mit einer solchen regelmäßigen Oberfläche etwas abweichen, so dass ein eingesetztes Gehäuse sich häufig von den vorgenannten Körpern mit einer regelmäßigen Oberfläche ableitet.

In einer bevorzugten Ausführungsform des erfindungsgemäßen Spektrometers weist das Gehäuse mindestens eine abgeflachte Teiloberfläche auf. Ein Beispiel für ein solches Gehäuse ist die vorgenannte Kugel, von der eine Kugelhaube entfernt wurde. Die abgeflachte Teiloberfläche ist vorzugsweise eben oder nur wenig gekrümmt. Bei einer solchen Ausführungsform kann das Spektrometer stabil auf einer Auflagefläche platziert werden.

Des Weiteren ermöglicht eine abgeflachte Teiloberfläche häufig einen guten Kontakt zwischen dem Spektrometer und einem Messobjekt, wenn das Messobjekt ausgehend von der abgeflachten Teiloberfläche mit Strahlung aus der mindestens einen Strahlungsquelle beaufschlagt wird und von dem Messobjekt reflektierte Strahlung von dem mindestens einen Strahlungsdetektor durch die abgeflachte Teiloberfläche als Messsignal registriert wird. Insbesondere dann ist die abgeflachte Teiloberfläche entsprechend einer nachfolgend beschriebenen bevorzugten Ausführungsform des erfindungsgemäßen Spektrometers als ein strahlungsdurchlässiger Bereich, d.h. als eine strahlungsdurchlässige Teiloberfläche, ausgestaltet.

In einer weiteren bevorzugten Ausführungsform des Spektrometers weist das Gehäuse mindestens eine strahlungsdurchlässige Teiloberfläche auf. Das Material, aus welchem die mindestens eine strahlungsdurchlässige Teiloberfläche besteht, ist erfindungsgemäß nicht eingeschränkt. Es kann sich dabei um ein Material handeln, welches beispielsweise durchlässig für Strahlung über den gesamten Wellenlängenbereich ist. Es kann sich aber auch um ein Material handeln, welches selektiv für Strahlung aus einem oder mehreren Wellenlängen-Teilbereichen durchlässig ist. Das verwendete Material hängt also von der Ausgestaltung der mindestens einen Strahlungsquelle und des mindestens einen Strahlungsdetektors des Spektrometers ab und kann entsprechend gewählt sein. Ist beispielsweise die mindestens eine Strahlungsquelle eine IR-Strahlungsquelle, so kann bevorzugt ein IR-durchlässiger Kunststoff verwendet werden.

Weist das Gehäuse mindestens einen strahlungsdurchlässigen Bereich auf, dann sind besonders bevorzugt die mindestens eine Strahlungsquelle und der mindestens eine Strahlungsdetektor derart im Gehäuse angeordnet, dass Strahlung von der mindestens einen Strahlungsquelle durch den mindestens einen strahlungsdurchlässigen Bereich aus dem Gehäuse heraus emittiert werden kann und von einem mit dieser Strahlung beaufschlagten Messobjekt entsprechend reflektierte Strahlung durch den mindestens einen strahlungsdurchlässigen Bereich von dem mindestens einen Strahlungsdetektor als Messsignal registriert werden kann. Dann sind also die mindestens eine Strahlungsquelle und der mindestens eine Strahlungsdetektor besonders bevorzugt in einem Reflexionsaufbau bezüglich des mindestens einen strahlungsdurchlässigen Bereichs innerhalb des Gehäuses angeordnet.

Die abgeflachte Teiloberfläche und die strahlungsdurchlässige Teiloberfläche können verschieden sein, einander überlappen oder aber identisch sein.

Überdies ist ein Spektrometer bevorzugt, bei dem das Gehäuse einen Sensor, ausgewählt aus der Gruppe bestehend aus einem Temperatursensor, einem Drucksensor, einem Beschleunigungssensor und einem Feuchtigkeitssensor umgibt. Die Ausgestaltung des mindestens einen Sensors ist erfindungsgemäß nicht eingeschränkt, bevorzugt ist der mindestens eine Sensor jedoch ein mikromechanischer Sensor.

Die Feuchtebestimmung kann also beispielsweise durch einen magnetischen, einen kapazitiven, einen resistiven oder einen induktiven mikromechanischen Sensor realisiert werden.

Ein Drucksensor kann beispielsweise ein kapazitiv arbeitender mikromechanischer Sensor sein, ein Sensor nach der Gegendruckmethode, ein piezoresistiv arbeitender Sensor. Auch Sensoren basierend auf Änderungen der spezifischen Leitfähigkeit, des Brechungsindex oder der Permeabilität, sowie der Fluoreszenzfähigkeit eines Festkörpers sind möglich.

Besonders bevorzugt ist der Drucksensor ein Drucksensor mit einer Membran. Hier wird durch die auf die Membran ausgeübte Kraft ein Druckimpuls an das Druckelement in dem mikromechanischen Drucksensor übertragen. Die Kraftübertragung durch die Membran ist insbesondere dann vorteilhaft, wenn der Drucksensor direkt mit dem Messobjekt, also beispielsweise einem Wäschestück, in Kontakt kommen kann. Die Membran ist daher dann vorteilhaft an der Außenwand des Gehäuses angeordnet oder bildet einen Teil des Gehäuses.

Als Beschleunigungssensor kann beispielsweise ein kapazitiv arbeitender Sensor eingesetzt werden. Auch ein Sensor basierend auf einem Widerstandsbelastungsstreifen ist einsetzbar. Es können zudem sowohl einachsige, als auch Sensoren mit zwei oder mehreren Messachsen verwendet werden.

Bevorzugt ist der mikromechanische Beschleunigungssensor ein Sensor mit 3 Messachsen. Auf diese Weise können durch die Auswertung der einzelnen Messachsensignale und deren Frequenzanteile auch Verschleißerscheinungen oder eine Unwucht in einem Haushaltsgerät mit dynamischen Komponenten, also beispielsweise einer Trommel, detektiert werden.

Ist der Temperatursensor ein mikromechanischer Temperatursensor, so ist dieser bevorzugt aus einem n-leitenden Silizium-Kristall, der in Planar-Technologie hergestellt.

Da mikromechanische Sensoren besonders kleinteilige Elemente sind, d.h. wenig Bauraum benötigen, können durchaus zwei oder mehr Sensoren zusätzlich im Inneren des Gehäuses angeordnet werden. Hierzu kann das Gehäuse insbesondere modular aufgebaut sein mit einem Spektrometermodul und weiteren Sensormodulen.

Die kleinteilige Ausgestaltung mikromechanischer Sensoren bietet überdies aber noch einen entscheidenden weiteren Vorteil. Werden nämlich mikromechanische Sensoren verwendet, dann können alle Sensoren die gleiche Messstelle sensieren, insbesondere nämlich auch die Messstelle, welche von dem erfindungsgemäßen Spektrometer erfasst wird. Die Messsignale haben somit alle einen gemeinsamen örtlichen Bezugspunkt. Dadurch können die einzelnen Messsignale sehr gut miteinander korreliert werden.

Erfindungsgemäß weist das Gehäuse des Spektrometers mindestens eine Öffnung zu einem Hohlraum auf, wobei die Strahlungsquelle und der Strahlungsdetektor so angeordnet sind, dass ein im Hohlraum befindliches Messobjekt, z.B. ein Gas oder eine wässrige Flüssigkeit wie z.B. eine Waschlauge, mit dem Spektrometer in einem Reflexionsmodus und/oder in einem Transmissionsmodus untersucht werden kann. Hierbei ist es wiederum bevorzugt, dass das Gehäuse eine erste Öffnung und eine zweite Öffnung aufweist und der Hohlraum sich zwischen der ersten und der zweiten Öffnung befindet. Der Hohlraum kann dann beispielsweise als gerades oder gebogenes Rohr vorliegen. Die Art und Ausgestaltung der Öffnung(en) und des Hohlraumes wird im Allgemeinen vom Verwendungszweck des Spektrometers abhängen. Generell sind diese allerdings so ausgestaltet, dass ein im Hohlraum befindliches Messobjekt als repräsentativ für die Umgebung des Spektrometers angesehen werden kann. Transportvorgänge und sonstige zeitliche Veränderungen des Messobjektes werden einen Einfluss haben. Bei einem gasförmigen Messobjekt wird häufig eine Öffnung genügen.

Die erste und/oder die zweite Öffnung gestatten im Allgemeinen einen Stoffaustausch mit der Umgebung des Spektrometers. Befindet sich das Spektrometer beispielsweise in einer flüssigen oder gasförmigen Umgebung, kann ein Teil des umgebenden Mediums in das Probenrohr gelangen und mittels des Spektrometers vermessen werden.

Wenn das Spektrometer mindestens eine Öffnung und damit einen Hohlraum aufweist, ist bevorzugt die mindestens eine Strahlungsquelle auf einer Seite des Hohlraumes, z.B. der Längsseite eines Probenrohrs, angeordnet und der mindestens eine Strahlungsdetektor auf einer gegenüberliegenden Seite des Hohlraums, z.B. einer gegenüberliegenden Längsseite des Probenrohrs. Bei einer solchen Ausführungsform kann innerhalb des Gehäuses ein Transmissionsaufbau des Spektrometers in Bezug auf den Hohlraum bzw. das Probenrohr realisiert werden.

Weist das Gehäuse sowohl mindestens einen strahlungsdurchlässigen Bereich, als auch eine erste und ggf. zweite Öffnung mit einem diese verbindenden Probenrohr auf, dann sind vorteilhaft mindestens zwei Strahlungsquellen und mindestens zwei Strahlungsdetektoren innerhalb des Gehäuses angeordnet, um sowohl den Reflexionsaufbau bezüglich des mindestens einen strahlungsdurchlässigen Bereichs als auch den Transmissionsaufbau bezüglich des Probenrohrs zu realisieren.

In einer ganz besonders bevorzugten Ausführungsform des erfindungsgemäßen Spektrometers kann zwischen einem Reflexionsmodus bezüglich des mindestens einen strahlungsdurchlässigen Bereichs und einem Transmissionsmodus bezüglich des Probenrohrs umgeschaltet werden.

Hierzu ist in einer besonders bevorzugten Ausführungsform des erfindungsgemäßen Spektrometers auf der der mindestens einen Strahlungsquelle entgegengesetzten Seite des Probenrohrs ein optischer Spiegel angeordnet. Der mindestens eine Strahlungsdetektor ist dann derart angeordnet und ausgestaltet, dass er ein Messsignal in Reflexion bezüglich des mindestens einen strahlungsdurchlässigen Bereichs registrieren kann und ein Messsignal bezüglich der durch das Probenrohr transmittierten und von dem optischen Spiegel reflektierten Strahlung registrieren kann. Hierzu kann der mindestens eine Strahlungsdetektor auch zwei Detektorflächen, eine in Reflexion und eine in Transmission aufweisen.

Die mindestens eine Strahlungsquelle kann dann insbesondere auch mindestens eine Blende aufweisen, welche ein Umschalten der emittierten Strahlung zwischen dem Reflexions- und dem Transmissionsmodus ermöglicht.

Die mindestens eine Strahlungsquelle des Spektrometers ist erfindungsgemäß nicht eingeschränkt, so dass beispielsweise eine Infrarot(IR)-, Ultraviolett(UV)- oder UV-VIS(Ultravioletter und sichtbarer Bereich)-Strahlungsquelle eingesetzt werden kann oder eine Kombination daraus.

Die mindestens eine Strahlungsquelle kann eine Breitbandquelle sein, eine durchstimmbare Strahlungsquelle, aber auch eine schmalbandige Strahlungsquelle, wie z.B. eine IR-LED. Die Strahlungsquelle kann zusätzlich auch optische Hilfsmittel aufweisen, wie etwa eine fokussierende Optik, Filterplättchen, Filterfolien oder - lackierungen oder auch einen MOEMS Fabry-Perot Frequenzfilter, welche eine Einstellung eines Wellenlängenbereichs ermöglichen können. Das Spektrometer kann auch mehrere solcher Strahlungsquellen aufweisen, welche auch unterschiedlich sein können.

In einer bevorzugten Ausführungsform ist die mindestens eine Strahlungsquelle eine IR-LED.

Der mindestens eine Strahlungsdetektor ist erfindungsgemäß nicht eingeschränkt. Der Strahlungsdetektor kann beispielsweise ein Breitbanddetektor sein, mit mindestens einer sensitiven Detektorfläche N. Der Strahlungsdetektor kann aber auch mehrere sensitive Flächen N aufweisen, oder auch ein lineares Array an Detektorflächen N, beispielsweise in Form von Pixeln. Auch der Detektor kann zusätzlich optische Hilfsmittel aufweisen, wie einen MOEMS Fabry-Perot Frequenzfilter, schmalbandige Filter oder auch einen dispersiven Keil. Auch das Material, aus welchem der Strahlungsdetektor besteht, ist erfindungsgemäß nicht eingeschränkt. Bevorzugt besteht der Strahlungsdetektor jedoch mindestens aus einem halbleitenden Material.

Das Spektrometer kann vorteilhaft einen optischen Spiegel enthalten.

Das Spektrometer kann völlig geschlossen oder aber zumindest mehr oder weniger luftdurchlässig sein. In einer bevorzugten Ausführungsform des Spektrometers umgibt aber das Gehäuse die Strahlungsquelle, den Strahlungsdetektor, die autarke Energieversorgungseinheit und die Schnittstelle zur drahtlosen Datenübertragung luftdicht und/oder wasserdicht, insbesondere wasserdicht.

Das erfindungsgemäße Spektrometer kann verschiedene Größen aufweisen. Allerdings weist das Gehäuse vorzugsweise eine maximale Abmessung, z.B. einen Durchmesser bei einer im Wesentlichen eine Kugelgestalt aufweisenden Form, von 3 cm bis 12 cm, auf. Bevorzugt weist das Gehäuse eine maximale Abmessung bzw. einen Durchmesser von 5 cm bis 10 cm auf, ganz besonders bevorzugt von 7 cm bis 9 cm.

Die Art und Weise wie die autarke Energieversorgungseinheit realisiert ist, ist erfindungsgemäß nicht eingeschränkt. Beispielsweise kann es sich bei der autarken Energieversorgungseinheit um eine Batterie oder einen Akkumulator handeln. Möglich ist auch eine induktiv aufladbare Energieversorgungseinheit.

Die autarke Energieversorgungseinheit im Spektrometer ist vorzugsweise eine thermoelektrische Energieversorgungseinheit. Hierdurch können vorteilhaft insbesondere Temperaturdifferenzen der Umgebung des Spektrometers, wie etwa bei der Verwendung in der Trommel einer Waschmaschine, eine Temperaturänderung während eines Waschprogramms, ausgenutzt werden. Hierzu weist das erfindungsgemäße Spektrometer dann bevorzugt ein Thermopile-Element auf.

Besonders vorteilhaft ist aber auch alternativ oder zusätzlich der Einsatz eines piezoelektrischen Elements, insbesondere eine Biegeelements zur autarken Energieversorgung.

Das erfindungsgemäße Spektrometer kann im Allgemeinen ortsunabhängig eingesetzt werden, wobei der Begriff "ortsunabhängig" breit auszulegen ist und insbesondere bedeutet, dass das Spektrometer mobil, also nicht ortsgebunden verwendet werden kann. Vorzugsweise kann das Spektrometer insbesondere für einen Benutzer tragbar als ein Handgerät ausgestaltet sein oder aber in einem Raum unabhängig von einem Haushaltsgerät aufstellbar sein.

Erfindungsgemäß ist das Spektrometer wie oben beschrieben zur Verwendung in Kombination mit mindestens einem wasserführenden Haushaltsgerät eingerichtet.

Im Allgemeinen ist dabei ein wasserführendes Haushaltsgerät ein Haushaltsgerät, bei dessen Betrieb Wasser verwendet wird oder anfällt, beispielsweise ein Gerät zur Reinigung oder Trocknung von Gegenständen, aber auch etwa zur Zubereitung von Getränken wie Kaffee. Erfindungsgemäß ist das mindestens eine Haushaltsgerät ein wasserführendes Haushaltsgerät zur Reinigung und oder Trocknung von Gegenständen. Zu reinigende Gegenstände können beispielsweise insbesondere Gläser und/oder Geschirr oder Wäschestücke sein. Der Begriff "Reinigen" umfasst dabei auch das Auffrischen. Ein wasserführendes Haushaltsgerät kann entsprechend auch ein Trockner oder ein Waschtrockner sein.

In einer besonders bevorzugten Ausführungsform ist das mindestens eine Haushaltsgerät ein wasserführendes Haushaltsgerät ausgewählt aus der Gruppe bestehend aus einer Waschmaschine, einem Waschtrockner und einem Trockner.

In einer nicht erfindungsgemäßen Ausführungsform ist das mindestens eine Haushaltsgerät ein nicht wasserführendes Haushaltsgerät zur Aufbewahrung, Zubereitung und/oder Verarbeitung von Lebensmitteln. Haushaltsgeräte zur Aufbewahrung von Lebensmitteln können dabei beispielsweise Kühlschränke oder Kühlgefrierkombinationen sein. Haushaltsgeräte zur Zubereitung von Lebensmitteln können beispielsweise Mikrowellengeräte sein, Herde oder Backöfen. Haushaltsgeräte zur Verarbeitung von Lebensmitteln können beispielsweise Küchenmaschinen oder Mixer sein. Dabei ist beispielsweise das mindestens eine Haushaltsgerät ein Kühlschrank oder eine Kühlgefrierkombination.

Das Material des Gehäuses ist erfindungsgemäß im Prinzip nicht eingeschränkt, wird aber im Allgemeinen vom Einsatzzweck abhängen. Bevorzugt besteht das Gehäuse jedoch aus einem oder mehreren Kunststoffen. Auf diese Weise kann ein Spektrometer insbesondere mit geringem Gewicht realisiert werden. Sofern ein Elastomer verwendet wird, kann auch ein gewisser Aufprallschutz realisiert werden.

Auch die Ausgestaltung des Spektrometers wird vom Einsatzzweck und insbesondere der chemischen und physikalischen Beanspruchung des Spektrometers beim Einsatz abhängen. Bei einem Einsatz in einem für das Spektrometer schädlichen Medium, beispielsweise einer Waschlauge, wird das Gehäuse möglichst dicht ausgestaltet sein. Sofern das Gehäuse eine oder mehrere Öffnungen aufweist, so ist die innere Oberfläche eines Hohlraumes entsprechend dicht ausgestaltet, um einen Kontakt zwischen den Bestandteilen des Spektrometers und dem schädlichen Medium auszuschließen.

Entsprechend wird auch die Art der Anordnung und Befestigung der Komponenten des Spektrometers innerhalb des Gehäuses vom Einsatzzweck des Spektrometers abhängen. So kann beispielsweise das Innere des Spektrometers, abgesehen von einem optional zur Aufnahme eines Messobjektes vorgesehenen Hohlraum, teilweise oder vollständig von einem Kunststoffharz ausgefüllt sein. Alternativ oder in Ergänzung hierzu können mechanische Elemente die Anordnung der Komponenten im Spektrometer stabilisieren.

In einer weiteren bevorzugten Ausführungsform des erfindungsgemäßen Spektrometers weist das Gehäuse an seiner Außenseite mindestens einen Aufprallschutz auf. Diese Ausführungsform ist insbesondere vorteilhaft, wenn das Spektrometer während seiner Verwendung bewegt wird, so dass es mit Gegenständen in seiner Umgebung in Kontakt kommen kann. Dies ist insbesondere bei einer Platzierung des Spektrometers in der Trommel eines wasserführenden Haushaltsgerätes der Fall.

Art und Ausgestaltung des optionalen Aufprallschutzes sind erfindungsgemäß nicht eingeschränkt, solange das Spektrometer für eine vorgesehene Verwendung ausreichend gegen die Folgen eines Aufpralls auf Gegenstände in seiner Umgebung geschützt werden kann. Ein solcher Aufprallschutz kann also beispielsweise aus einer oder mehreren Noppen bestehen, welche auf der Außenseite des Gehäuses verteilt sein können. Der Aufprallschutz kann aber auch beispielsweise eine am Gehäuse befestigte oder über das Gehäuse übergezogene mehr oder weniger geschlossene Umhüllung sein. Vorzugsweise bestehen die Noppen bzw. die Umhüllung aus einem nachgiebigen Material, z.B. einem Elastomeren wie Gummi.

In einer weiteren bevorzugten Ausführungsform sind die mindestens eine Strahlungsquelle, der mindestens eine Strahlungsdetektor, die optional im Mikroskop vorhandene Auswerteeinheit und die autarke Energieversorgung als mikromechanische Bauteile realisiert. Auf diese Weise kann das Spektrometer besonders platzsparend ausgestaltet werden.

In einer weiteren bevorzugten Ausführungsform ist innerhalb des Gehäuses, d.h. im Wesentlichen vom Gehäuse umschlossen, eine Dosiervorrichtung für Behandlungsmittel angeordnet. Auf diese Weise kann bei der Verwendung des Spektrometers während eines Behandlungsprogramms innerhalb des wasserführenden Haushaltsgeräts als Folge eines mit dem Spektrometer ermittelten Bedarfs direkt eine definierte Menge an Behandlungsmittel nachdosiert werden.

In einer überdies bevorzugten Ausführungsform weist das Spektrometer zusätzlich eine Anzeigevorrichtung auf. Die Ausgestaltung der Anzeigevorrichtung ist erfindungsgemäß nicht eingeschränkt. Es kann sich beispielsweise um eine oder mehrere Leuchtanzeigen, etwa LEDs handeln, aber auch um ein Display, welches Informationen in Form von Bild, Text und/oder Schrift, farbig und/oder schwarz/weiß ausgeben kann.

Jedenfalls kann über eine solche Anzeige vorteilhaft ein Betriebszustand des Spektrometers angezeigt werden. Der Begriff "Betriebszustand" ist dabei breit auszulegen und umfasst jegliche Betriebsarten einschließlich eines An/Aus/Standby-Zustands des Spektrometers, sowie einen Energiestatus. Ein Benutzer kann also beispielsweise anhand der Betriebszustandsanzeige erkennen, ob das Spektrometer eingeschaltet ist, in Betrieb ist oder auch, ob genügend Energie für den Betrieb zur Verfügung steht.

Darüber hinaus kann vorteilhaft eine Warnung und/oder Information an einen Benutzer über eine solche Anzeigevorrichtung ausgegeben werden. Etwa dann, wenn beispielsweise mit dem Spektrometer ein schädliches Gas oder auch ein Allergen oder Toxin detektiert wird.

Da in einer weiteren bevorzugten Ausführungsform des erfindungsgemäßen Spektrometers mindestens ein Sensor ausgewählt aus der Gruppe bestehend aus einem Temperatursensor, einem Drucksensor, einem Beschleunigungssensor und einem Feuchtigkeitssensor im Inneren des Gehäuses angeordnet ist, können bei dieser Ausführungsform mittels einer solchen Anzeigevorrichtung auch Signale dieser Sensoren als Warnung und/oder Information ausgegeben werden.

Gegenstand der Erfindung ist außerdem ein System zur qualitativen und/oder quantitativen Erfassung von chemischen Substanzen in einem Haushaltsgerät, umfassend ein hierin beschriebenes Spektrometer und mindestens ein Haushaltsgerät. Qualitativ bedeutet hierin in der Regel die Bestimmung einer Art einer Substanz und/oder einer Eigenschaft. Quantitativ bedeutet hierin in der Regel die Bestimmung einer Konzentration oder einer Menge.

Dabei ist der hierin verwendete Begriff "Substanz" sehr breit auszulegen, denn er umfasst sowohl einzelne Verbindungen, wie etwa Tensidverbindungen aus Behandlungsmitteln oder flüchtige Substanzen, aber auch Gemische, wie etwa typische Verschmutzungen. Beispiele für solche Verschmutzungen können Eigelb, Tomate, Kaffee oder auch fetthaltige Speisereste sein. Flüchtige Substanzen können beispielsweise organische Verbindungen sein, wie etwa aus Emissionen von Mikroorganismen, aber auch beispielsweise Kohlenwasserstoffe wie im Fall von Propangastrocknern.

Ein Farbstoff ist ebenfalls eine Substanz, so dass das Verfahren insbesondere auch die Bestimmung einer Farbe, z.B. eines Wäschestückes umfasst. Insbesondere bei Wäschestücken spielt nämlich auch die Bestimmung einer Farbe eine wichtige Rolle, um Fehlbeladungen zu vermeiden.

Kein Gegenstand der Erfindung ist ein Verfahren zum Betrieb eines Spektrometers, umfassend ein Gehäuse, das mindestens eine Strahlungsquelle, mindestens einen Strahlungsdetektor, und eine autarke Energieversorgungseinheit umgibt und eine Schnittstelle zur drahtlosen Datenübertragung enthält, wobei das Spektrometer eingerichtet ist, um
(a) vom Strahlungsdetektor erhaltene Daten zur detektierten Strahlung in einer internen Auswerteeinheit und/oder einer externen Auswerteeinheit auszuwerten, und
(b) drahtlos direkt oder indirekt mit mindestens einem Haushaltsgerät, das eine Steuereinrichtung aufweist, zu kommunizieren,
wobei das Verfahren die folgenden Schritte umfasst:
(i) Vermessen eines Messobjekts mit dem Spektrometer, indem von der mindestens einen Strahlungsquelle Strahlung in einem Wellenlängenbereich von λ₁ bis λ₂ in mindestens einem Zeitintervall Δτ emittiert wird, so dass das Messobjekt damit beaufschlagt wird, und der mindestens eine Strahlungsdetektor die von dem Messobjekt reflektierte Strahlung und/oder transmittierte Strahlung als Messsignal oder Messsignale registriert;
(ii1) Ubermitteln des im Schritt (i) erhaltenen Messsignals oder der erhaltenen Messsignale an die interne Auswerteeinrichtung und Auswerten des Messsignals oder der Messsignale mit einer in der internen Auswerteeinrichtung hinterlegten Auswerteroutine in Hinblick auf eine quantitative und/oder qualitative Bestimmung mindestens einer chemischen Substanz im Messobjekt als Auswertungsergebnis; und/oder
(ii2) Übermitteln des im Schritt (i) erhaltenen Messsignals oder der erhaltenen Messsignale an eine externe Auswerteeinrichtung, die mit einem externen Server kommuniziert, und Auswerten des Messsignals und der Messsignale in Hinblick auf eine quantitative und/oder qualitative Bestimmung mindestens einer chemischen Substanz des Messobjekts als Auswertungsergebnis; und
(iii) Übermitteln des Auswertungsergebnisses aus Schritt (ii1) und/oder Schritt (ii2) an die Steuereinrichtung des mindestens einen Haushaltsgeräts, welche in Abhängigkeit vom Auswertungsergebnis eine Maßnahme durchführt; und wobei die Schritte (i) bis (iii) einmal oder mehrmals durchgeführt werden.

Die Maßnahme wird dabei im Allgemeinen eine Änderung eines vorgesehenen Behandlungsprogrammes sein. Dabei kann es sich beispielsweise in einer Waschmaschine um die Nachdosierung von Waschmittel, eine Änderung der Temperatur und/oder der Trommeldrehzahl oder die Gestaltung einer Spülphase handeln.

Des Weiteren ist Gegenstand der Erfindung ein Verfahren zum Betrieb eines Systems zur qualitativen und/oder quantitativen Erfassung von chemischen Substanzen in einem Haushaltsgerät, umfassend ein Spektrometer und mindestens ein Haushaltsgerät, wobei das Spektrometer ein Gehäuse, das mindestens eine Strahlungsquelle, mindestens einen Strahlungsdetektor und eine autarke Energieversorgungseinheit umgibt, und eine Schnittstelle zur drahtlosen Datenübertragung umfasst, und wobei das Spektrometer eingerichtet ist, um
(a) vom Strahlungsdetektor erhaltene Daten zur detektierten Strahlung in einer internen Auswerteeinheit und/oder einer externen Auswerteeinheit auszuwerten, und
(b) drahtlos direkt oder indirekt mit mindestens einem Haushaltsgerät, das eine Steuereinrichtung aufweist, zu kommunizieren,
wobei das Verfahren die folgenden Schritte umfasst:
(i) Vermessen eines Messobjekts mit dem Spektrometer, indem von der mindestens einen Strahlungsquelle Strahlung in einem Wellenlängenbereich von λ₁ bis λ₂ in mindestens einem Zeitintervall Δτ emittiert wird, so dass das Messobjekt damit beaufschlagt wird, und der mindestens eine Strahlungsdetektor die von dem Messobjekt reflektierte Strahlung und/oder transmittierte Strahlung als Messsignal oder Messsignale registriert;
(ii1) Übermitteln des im Schritt (i) erhaltenen Messsignals oder der erhaltenen Messsignale an die interne Auswerteeinrichtung und Auswerten des Messsignals oder der Messsignale mit einer in der internen Auswerteeinrichtung hinterlegten Auswerteroutine in Hinblick auf eine quantitative und/oder qualitative Bestimmung mindestens einer chemischen Substanz im Messobjekt als Auswertungsergebnis; und/oder
(ii2) Übermitteln des im Schritt (i) erhaltenen Messsignals oder der erhaltenen Messsignale an eine externe Auswerteeinrichtung, die mit einem externen Server kommuniziert, und Auswerten des Messsignals und der Messsignale auf dem Server mit einer im Server hinterlegten Auswerteroutine in Hinblick auf eine quantitative und/oder qualitative Bestimmung mindestens einer chemischen Substanz des Messobjekts als Auswertungsergebnis; und
(iii) Übermitteln des Auswertungsergebnisses aus Schritt (ii1) und/oder Schritt (ii2) an die Steuereinrichtung des mindestens einen Haushaltsgeräts, welche in Abhängigkeit vom Auswertungsergebnis eine Maßnahme durchführt; und wobei die Schritte (i) bis (iii) einmal oder mehrmals durchgeführt werden.

Erfindungsgemäß ist vorgesehen, dass das Spektrometer wie oben beschrieben zur Verwendung in Kombination mit mindestens einem wasserführenden Haushaltsgerät eingerichtet ist und vorteilhaft auch ortsunabhängig verwendet werden kann.

Das erfindungsgemäße Verfahren kann daher sowohl außerhalb des mindestens einen Haushaltsgeräts, als auch innerhalb des mindestens einen Haushaltsgeräts durchgeführt werden. Des Weiteren kann das erfindungsgemäße Verfahren sowohl vor, während, als auch nach der Durchführung eines Behandlungsprogramms in dem mindestens einen Haushaltsgerät durchgeführt werden.

In einer bevorzugten Ausführungsform kann das erfindungsgemäße Verfahren sowohl an einem trockenen Messobjekt, als auch an einem feuchten Messobjekt durchgeführt werden, wenn das Gehäuse mindestens einen strahlungsdurchlässigen Bereich aufweist.

In einer weiteren bevorzugten Ausführungsform kann das erfindungsgemäße Verfahren an Flüssigkeiten und Gasen als Messobjekt durchgeführt werden, da das Gehäuse des Spektrometers eine erste und/oder eine zweite Öffnung und einen Hohlraum aufweist.

Ist das Haushaltsgerät beispielsweise eine Waschmaschine, so kann das erfindungsgemäße Verfahren vor der Durchführung eines Behandlungsprogramms durchgeführt werden. In diesem Fall ist das Messobjekt beispielsweise ein Wäschestück. Ein Benutzer kann dann etwa das Wäschestück bereits außerhalb der Waschmaschine mit dem Spektrometer vermessen, beispielsweise um eine Verschmutzung oder auch eine Textilart des Wäschestücks zu bestimmen. Wenn das Gehäuse mindestens einen strahlungsdurchlässigen Bereich aufweist, dann kann das Spektrometer entweder auf das Wäschestück aufgelegt werden oder auch mit Abstand auf das Wäschestück gerichtet sein, so dass jedenfalls von der mindestens einen Strahlungsquelle Strahlung in einem Wellenlängenbereich von λ₁ bis λ₂ in mindestens einem Zeitintervall Δτ emittiert wird, so dass das Wäschestück damit beaufschlagt wird, und der mindestens eine Strahlungsdetektor die von dem Wäschestück reflektierte Strahlung als Messsignal registriert. Das von dem Wäschestück erhaltene Messsignal wird dann an eine interne oder externe Auswerteeinrichtung übermittelt und das Messsignal mit einer in der Auswerteeinrichtung hinterlegten Auswerteroutine in Hinblick auf die Bestimmung in diesem Fall beispielsweise einer Textilart und einer Verschmutzung ausgewertet.

Erfindungsgemäß ist es aber nicht eingeschränkt, welche und wie viele Substanzen ausgehend von einem oder mehreren Messsignalen mit der in der Auswerteeinheit hinterlegten Auswerteroutine bestimmt werden.

Ist die Textilart beispielsweise Seide und die Verschmutzung beispielsweise Rotwein, so kann ein solches Auswertungsergebnis an die Steuereinrichtung einer Waschmaschine übermittelt werden. Als Maßnahme kann die Steuereinrichtung dann das entsprechende Behandlungsprogramm auswählen und nach Bestätigung durch einen Benutzer oder selbstständig durchführen.

In einer weiteren Ausführungsform des erfindungsgemäßen Verfahrens kann überdies das Spektrometer zu einem Wäschestück in die Trommel einer Waschmaschine mit eingelegt werden. In diesem Fall kann das Wäschestück, wenn das Gehäuse einen strahlungsdurchlässigen Bereich aufweist und/oder die Waschlauge, da das Gehäuse erfindungsgemäß einen Hohlraum aufweist, während der Durchführung des Behandlungsprogramms zu einem oder mehreren Zeitpunkten gemäß dem erfindungsgemäßen Verfahren vermessen werden. Wird dann beispielsweise eine Konzentration an Behandlungsmittel auf dem Wäschestück und/oder in der Waschlauge ermittelt, so kann die Steuereinrichtung als Maßnahme bei einem Unterschreiten einer optimalen Menge an Behandlungsmittel beispielsweise eine Nachdosierung einleiten. Ist in dem Gehäuse des Spektrometers zusätzlich eine Dosiervorrichtung angeordnet, so kann auch direkt in der Trommel über die Dosiervorrichtung des Spektrometers Behandlungsmittel nachdosiert werden. Bei einem Überschreiten einer optimalen Menge an Behandlungsmittel kann eine Steuereinrichtung des Haushaltsgerätes auch einen zusätzlichen Spülschritt einleiten.

In einer weiteren bevorzugten Ausführungsform ist das Spektrometer in ein Netzwerk umfassend mindestens ein erstes und ein zweites Haushaltsgerät integriert, welche jeweils eine Steuereinrichtung und einen externen Server aufweisen, wobei in Schritt (c) das Übermitteln der aus dem Messsignal oder den Messsignalen quantitativ und/oder qualitativ bestimmten mindestens einen Substanz bezüglich des Messobjekts über den externen Server an die Steuereinrichtung des ersten und/oder zweiten Haushaltsgeräts erfolgt.

Sind die mindestens zwei Haushaltsgeräte eine Waschmaschine und ein Trockner, so kann beispielsweise das Spektrometer in die Trommel der Waschmaschine eingelegt werden und mit den Wäschestücken gemeinsam ein Behandlungsprogramm durchlaufen. Ist das Behandlungsprogramm beendet, so kann mit dem erfindungsgemäßen Verfahren beispielsweise eine Restfeuchte der Wäschestücke ermittelt werden. Über den externen Server kann der Wert für die Restfeuchte dann an die Steuereinrichtung des Trockners übermittelt werden. Die Steuereinrichtung des Trockners kann dann in Abhängigkeit der übermittelten Restfeuchte und einer zuvor bestimmten Textilart ein optimales Trocknungsprogramm auswählen und nach der Bestätigung durch einen Benutzer oder selbstständig ausführen. Das Spektrometer kann dann überdies auch zu den Wäschestücken in die Trommel des Trockners mit eingelegt werden, um mit dem erfindungsgemäßen Verfahren den Verlauf des Trocknungsprozesses optimal überwachen und steuern zu können.

Der externe Server kann insbesondere auch in ein mobiles Benutzerendgerät, wie ein Smartphone oder ein Tablet-PC, integriert sein.

Im erfindungsgemäßen Verfahren wird gemäß Schritt a) ein Messobjekt mit dem Spektrometer vermessen, indem von der mindestens einen Strahlungsquelle Strahlung in einem Wellenlängenbereich von λ₁ bis λ₂ in mindestens einem Zeitintervall Δτ emittiert wird, so dass das Messobjekt damit beaufschlagt wird, und der mindestens eine Strahlungsdetektor die von dem Messobjekt reflektierte Strahlung als Messsignal registriert. Das Vermessen von Messobjekten mit einem Spektrometer kann dabei im Allgemeinen statisch oder dynamisch erfolgen. Erfindungsgemäß ist die Art der Messung diesbezüglich nicht eingeschränkt. Die Anzahl und die Länge des mindestens einen Zeitintervalls Δτ, in welchem das Spektrometer misst, sind dabei erfindungsgemäß ebenfalls nicht eingeschränkt. Bevorzugt sollte das mindestens eine Zeitintervall Δτ jedoch so lang sein, dass Messsignale erhalten werden können, aus welchen die Auswerteeinheit über die hinterlegte Auswerteroutine die mindestens eine Substanz des Messobjekts auswerten kann. Hierzu kann sich die Länge des Zeitintervalls Δτ beispielsweise an der Allan-Varianz orientieren.

Auch die Breite des mindestens einen Wellenlängenbereichs von λ₁ bis λ₂ ist erfindungsgemäß nicht eingeschränkt. Ein Wellenlängenbereich beschreibt dabei den Bereich, in welchem die mindestens eine Strahlungsquelle des Spektrometers zum Vermessen des Messobjekts Strahlung emittiert und/oder in welchem der mindestens eine Strahlungsdetektor ein Messsignal registriert. Die Einstellung eines solchen Wellenlängenbereichs kann dabei erfindungsgemäß durch die Wahl der mindestens einen Strahlungsquelle, die Wahl des mindestens einen Strahlungsdetektors und/oder über zusätzliche optische Hilfsmittel erfolgen, beispielsweise optische Filter.

Auch die Anzahl der Wellenlängenbereiche λ₁ bis λ₂ ist erfindungsgemäß nicht eingeschränkt hängt aber von den zu bestimmenden Substanzen des zu vermessenden Messobjekts ab, was wiederum von der Art und Ausgestaltung des Haushaltsgeräts abhängt.

Wenn die Auswerteeinheit das Messsignal auswertet, wird dabei in der Regel zunächst mindestens ein Spektrum erzeugt. Um eine quantitative Auswertung eines Spektrums durchführen zu können, wird ein Spektrum im Allgemeinen auf einen Standard normiert. Auf diese Weise wird ein Abgleich eines aufgenommenen Spektrums mit beispielsweise einem Kalibrationsspektrum möglich. Es können aber auch mehrere aufgenommene Spektren miteinander abgeglichen werden, beispielsweise um die Abnahme einer bestimmten Menge einer Substanz zu verfolgen. In einer bevorzugten Ausführungsform des erfindungsgemäßen Verfahrens ist der Standard dabei vorzugsweise Spektralon, wenn das Spektrum ein IR-Spektrum ist.

Auswerteroutinen zur qualitativen und quantitativen Auswertung von Spektren sind in der Regel vielfältig und werden sicherlich im Allgemeinen vom verwendeten Spektrometer-Typ abhängen und auch von der mindestens einen zu bestimmenden Substanz und/oder der mindestens einen Eigenschaft eines Messobjekts. Erfindungsgemäß ist die hinterlegte Auswerteroutine daher ebenfalls nicht eingeschränkt. Bevorzugt wird jedoch eine Auswertung auf der Grundlage des Lambert-Beer Gesetzes mittels multivariater Datenanalyse durchgeführt, also beispielsweise eine Principal Components Analysis mit dem Non-linear Iterative Partial Least Squares Algorithmus und anschließender Partial Least Squares Regression, aus welcher eine Responsematrix erhalten werden kann.

Daher sind besonders bevorzugt Kalibrationsspektren oder wellenlängenabhängige Absorptionsstandards für unterschiedliche Substanzen in der Auswerteroutine hinterlegt. Die Anzahl und die Art der jeweils hinterlegten Daten können variieren und hängen dabei von der Verwendung des tragbaren Spektrometers und der Art und Ausgestaltung des mindestens einen Haushaltsgeräts ab.

Die Erfindung hat zahlreiche Vorteile. Das erfindungsgemäße Spektrometer kann ortsunabhängig, d.h. mobil und unabhängig von einem festen Einbauort, verwendet werden. Dabei ist insbesondere eine Verwendung als in eine Trommel eines Haushaltsgerätes zugebbares Spektrometer oder aber als Handgerät möglich. Das Spektrometer kann überdies in Kombination mit einer Vielzahl an Haushaltsgeräten verwendet werden, so beispielsweise mit Haushaltsgeräten zur Aufbewahrung, Verarbeitung und Zubereitung von Lebensmitteln. Wird das erfindungsgemäße Spektrometer insbesondere in Kombination mit wasserführenden Haushaltsgeräten verwendet, so kann mit nur einem Spektrometer der gesamte Wäschepflegeprozess vom Wäschesammler bis in den Kleiderschrank analysiert und optimiert werden.

Weitere Einzelheiten der Erfindung ergeben sich aus der nachfolgenden Beschreibung nicht einschränkender Ausführungsformen. Hierbei wird Bezug genommen auf die Figuren 1, 2 und 3.
- Figur 1: zeigt schematisch ein Beispiel eines nicht erfindungsgemäßen Spektrometers mit einer strahlungsdurchlässigen Teiloberfläche sowie einer internen Auswerteeinheit.
- Figur 2: zeigt schematisch eine nicht einschränkende Ausführungsform des erfindungsgemäßen Spektrometers mit einer strahlungsdurchlässigen Teiloberfläche und zwei Öffnungen im Gehäuse mit einem diese verbindenden Probenrohr als Hohlraum und einem optischen Spiegel in Transmissionsmodus, wobei die Auswerteeinheit aus Gründen der Übersichtlichkeit weggelassen ist.
- Figur 3: zeigt schematisch eine nicht einschränkende Ausführungsform des erfindungsgemäßen Spektrometers mit einer strahlungsdurchlässigen Teiloberfläche und zwei Öffnungen mit einem diese verbindenden Probenrohr als Hohlraum und einem optischen Spiegel in Reflexionsmodus.

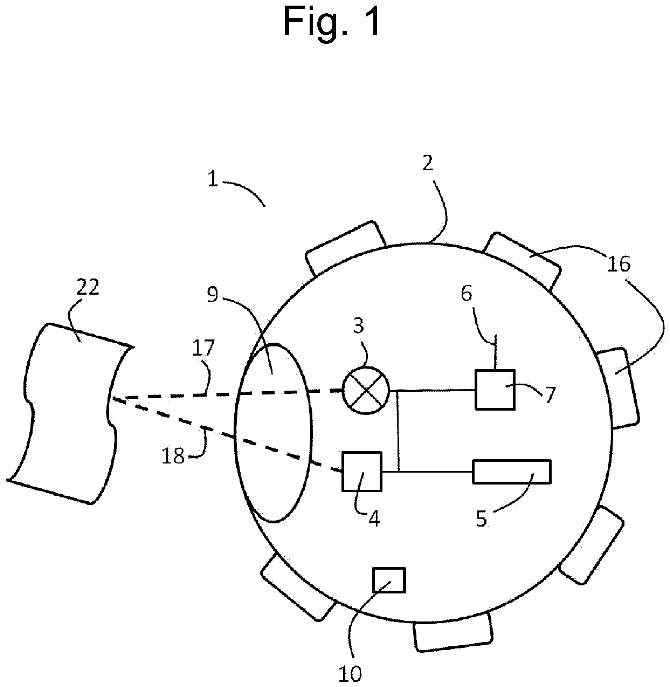

Figur 1 zeigt schematisch ein Beispiel eines nicht erfindungsgemäßen Spektrometers 1. In dieser Ausführungsform weist das Spektrometer 1 ein Gehäuse 2 in Form einer abgeplatteten Kugel auf. Innerhalb des Gehäuses 2 sind eine IR-LED als Strahlungsquelle 3 und ein Strahlungsdetektor 4 angeordnet. Das Gehäuse 2 weist eine kreisförmige strahlungsdurchlässige Teiloberfläche 9 auf, die hier gleichzeitig eine abgeflachte Teiloberfläche ist. Die strahlungsdurchlässige Teiloberfläche 9 ist in dieser Ausführungsform aus einem IR-durchlässigen Kunststoff gefertigt. Die Strahlungsquelle 3 und der Strahlungsdetektor 4 sind dabei derart in Bezug zu der strahlungsdurchlässigen Teiloberfläche 9 angeordnet, dass ein Messobjekt, hier ein Wäschestück 22, außerhalb des Gehäuses 2 mit Strahlung 17 aus der Strahlungsquelle 3 beaufschlagt werden kann und die von dem Wäschestück 22 reflektierte Strahlung 18 von dem Strahlungsdetektor 4 als Messsignal registriert werden kann. Vom Gehäuse 2 umgeben sind weiterhin eine interne Auswerteeinheit 7, eine Schnittstelle 6 zur drahtlosen Datenübertragung und eine autarke Energieversorgungseinheit 5. Die autarke Energieversorgungseinheit 5 ist hier thermoelektrisch über ein Thermopile-Element realisiert.

Registriert der Strahlungsdetektor 4 ein Messsignal, so kann dieses an die interne Auswerteeinheit 7 übermittelt werden. In der internen Auswerteeinheit 7 ist bevorzugt eine Auswerteroutine hinterlegt, mittels welcher das Messsignal in Bezug auf mindestens eine chemische Substanz des Messobjekts, in diesem Fall eine Textilart, ausgewertet werden kann. Über die Schnittstelle 6 zur drahtlosen Datenübertragung kann das von der Auswerteeinheit 7 aus dem Messsignal erhaltene Auswertungsergebnis dann an die Steuereinrichtung des mindestens einen Haushaltsgeräts übertragen werden. Ist das mindestens eine Haushaltsgerät beispielsweise eine Waschmaschine, so kann die Steuereinrichtung dann in Abhängigkeit von einer ermittelten Textilart ein optimales Behandlungsprogramm auswählen und nach Bestätigung durch einen Benutzer oder selbstständig durchführen.

In der Figur 1 weist das Gehäuse 2 auf seiner Außenseite Noppen 16 als Aufprallschutz auf. 10 bedeutet einen Sensor.

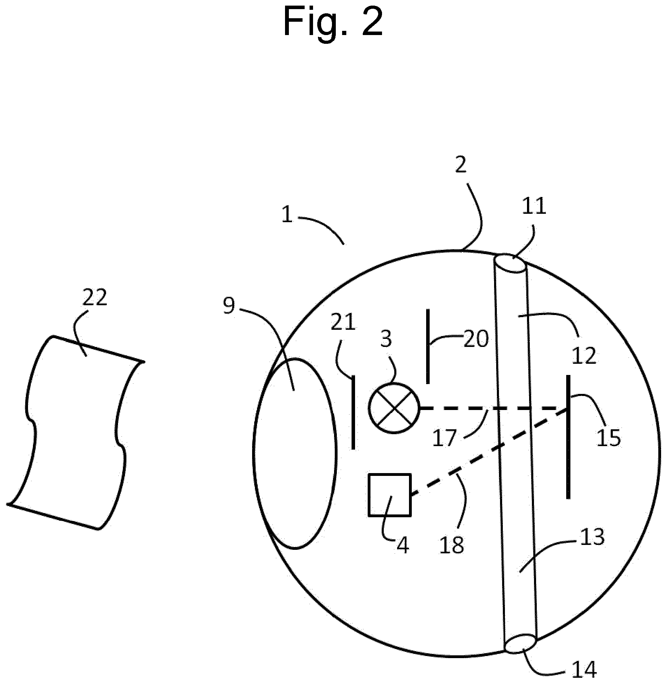

Figur 2 zeigt in einer nicht einschränkenden Ausführungsform ein erfindungsgemäßes Spektrometer 1, bei welchem das Gehäuse 2 zusätzlich eine erste Öffnung 11, eine zweite Öffnung 14 und ein die beiden Öffnungen 11, 14 verbindendes Probenrohr als Hohlraum 12 aufweist. Das Probenrohr 12 ist vorzugsweise aus Quarzglas gefertigt. Auf der der Strahlungsquelle 3 und dem Strahlungsdetektor 4 abgewandten Seite des Probenrohrs 12 befindet sich ein optischer Spiegel 15. Über die beiden Öffnungen 11 und 14 kann eine Flüssigkeit oder ein Gas das Probenrohr befüllen bzw. durchströmen. Je nach Verwendung des Spektrometers 1 kann dies beispielsweise Waschlauge sein oder auch Prozessluft eines Trockners.

Vor und hinter der Strahlungsquelle 3 ist jeweils eine Blende 21, 20 angeordnet. Die vordere Blende 21 kann dabei in geschlossenem Zustand verhindern, dass Strahlung von der Strahlungsquelle 3 durch die strahlungsdurchlässige Teiloberfläche 9 emittiert wird. Ist dann die hintere Blende 20 geöffnet, so kann Strahlung 17 von der Strahlungsquelle 3 in Richtung des Probenrohrs 12 emittiert werden und dieses durchdringen. Die transmittierte 17 Strahlung wird dann von dem optischen Spiegel 15 reflektiert und kann nach erneutem Durchgang als Strahlung 18 durch das Probenrohr 12 von dem Strahlungsdetektor 4 als Messsignal registriert werden.

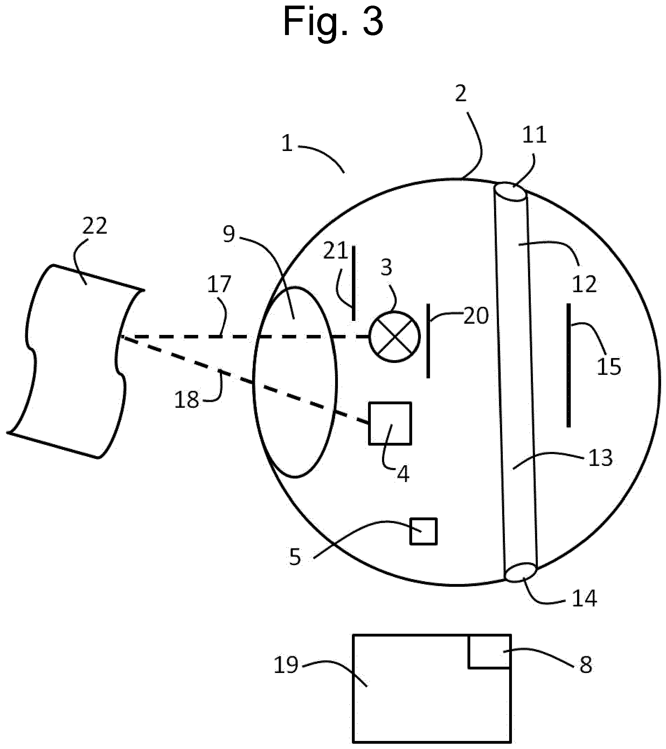

Figur 3 zeigt beispielsweise die nicht einschränkende Ausführungsform aus Figur 2, wobei hier das Spektrometer 1 von dem unter Figur 2 beschriebene Transmissionsmodus in den Reflexionsmodus umgeschaltet ist. In Figur 3 ist nämlich Blende 20 geschlossen und Blende 21 ist geöffnet. Ist Blende 21 geöffnet, so erfolgt die Emission von Strahlung 17 von der Strahlungsquelle 3 durch die strahlungsdurchlässige Teiloberfläche 9 und der Strahlungsdetektor 4 registriert die von dem Wäschestück 22 reflektierte Strahlung 18 als ein Messsignal.

Bei der in der Figur 3 gezeigten Ausführungsform eines erfindungsgemäßen Spektrometers erfolgt die Auswertung der vom Strahlungsdetektor 4 erhaltenen Daten zur detektierten Strahlung 18 in einer externen Auswerteeinheit 8, die mit einem externen Server 19 kommuniziert.

5 bedeutet eine autarke Energieversorgungseinheit und 13 bedeutet ein Messobjekt, z.B. eine Waschlauge, im Probenrohr 12.

Bevorzugt ist dabei der Strahlungsdetektor 4 in der in den Figuren 2 und 3 beschriebenen Ausführungsform des erfindungsgemäßen Spektrometers mit mindestens zwei Detektorflächen ausgestattet, wobei eine Detektorfläche zur Detektion im Reflexionsmodus ausgebildet ist und eine Detektorfläche zur Detektion im Transmissionsmodus. Alternativ können aber auch zwei Strahlungsdetektoren verwendet werden, sowie anstelle der Blenden auch zwei Strahlungsquellen.

### Bezugszeichen

- 1: Spektrometer, IR-Spektrometer
- 2: Gehäuse
- 3: Strahlungsquelle, IR-LED
- 4: Strahlungsdetektor
- 5: Autarke (thermoelektrische) Energieversorgungseinheit
- 6: Schnittstelle zur drahtlosen Datenübertragung
- 7: Interne Auswerteeinheit
- 8: Externe Auswerteeinheit
- 9: Strahlungsdurchlässige Teiloberfläche; abgeflachte Teiloberfläche
- 10: Sensor
- 11: (Erste) Öffnung (zu einem Hohlraum im Gehäuse)
- 12: Hohlraum (im Gehäuse)
- 13: Messobjekt (im Hohlraum)
- 14: Zweite Öffnung (zu einem Hohlraum im Gehäuse)
- 15: Optischer Spiegel
- 16: Aufprallschutz, z.B. Gumminoppen
- 17: Emittierte Strahlung
- 18: Reflektierte und/oder transmittierte Strahlung
- 19: (Externer) Server
- 20: Blende
- 21: Blende
- 22: Wäschestück, Messobjekt

## Patentansprüche

1. Spektrometer (1), umfassend ein Gehäuse (2), mindestens eine Strahlungsquelle (3), mindestens einen Strahlungsdetektor (4), eine autarke Energieversorgungseinheit (5) und eine Schnittstelle (6) zur drahtlosen Datenübertragung; wobei das Gehäuse die mindestens eine Strahlungsquelle, den mindestens einen Strahlungsdetektor und die autarke Energieversorgungseinheit umgibt und das Spektrometer (1) eingerichtet ist, um
(a) vom Strahlungsdetektor (4) erhaltene Daten zur detektierten Strahlung in einer internen Auswerteeinheit (7) und/oder einer externen Auswerteeinheit (8) auszuwerten, und
(b) drahtlos direkt oder indirekt mit mindestens einem Haushaltsgerät zu kommunizieren,
wobei das mindestens eine Haushaltsgerät ein wasserführendes Haushaltsgerät zur Reinigung und/oder Trocknung von Gegenständen ist, das Gehäuse in der Trommel des wasserführenden Haushaltsgerätes einsetzbar ist und eine möglichst regelmäßige Oberfläche hat, um Bewegungen in der Trommel des wasserführenden Haushaltsgerätes mitmachen zu können, umfassend eine runde Form, wie eine Kugel und ein sonstiges Ellipsoid, ein regelmäßiges Polyeder, sowie Mischformen zwischen runden Formen und regelmäßigen Polyedern und das Gehäuse (2) mindestens eine Öffnung (11) zu einem Hohlraum (12) im Gehäuse aufweist, wobei die mindestens eine Öffnung einen Stoffaustausch mit der Umgebung des Spektrometers gestattet, und die Strahlungsquelle (3) und der Strahlungsdetektor (4) so angeordnet sind, dass ein im Hohlraum (12) befindliches Messobjekt (13) mit dem Spektrometer (1) in einem Reflexionsmodus und/oder in einem Transmissionsmodus untersucht werden kann.

2. Spektrometer (1) nach Anspruch 1, **dadurch gekennzeichnet, dass** das Gehäuse (2) mindestens eine abgeflachte Teiloberfläche (9) aufweist.

3. Spektrometer (1) nach Anspruch 1 oder 2, **dadurch gekennzeichnet, dass** das Gehäuse (2) einen Sensor (10), ausgewählt aus der Gruppe bestehend aus einem Temperatursensor, einem Drucksensor, einem Beschleunigungssensor und einem Feuchtigkeitssensor umgibt.

4. Spektrometer (1) nach einem der Ansprüche 1 bis 3, **dadurch gekennzeichnet, dass** das Gehäuse (2) mindestens eine strahlungsdurchlässige Teiloberfläche (9) aufweist.

5. Spektrometer (1) nach einem der Ansprüche 1 bis 4, **dadurch gekennzeichnet, dass** das Gehäuse (2) eine erste Öffnung (11) und eine zweite Öffnung (14) aufweist und der Hohlraum (12) sich zwischen der ersten und der zweiten Öffnung befindet.

6. Spektrometer (1) nach einem der Ansprüche 1 bis 5, **dadurch gekennzeichnet, dass** es einen optischen Spiegel (15) enthält.

7. Spektrometer (1) nach einem der Ansprüche 1 bis 6, **dadurch gekennzeichnet, dass** das Gehäuse (2) die Strahlungsquelle (3), den Strahlungsdetektor (4), die autarke Energieversorgungseinheit (5) und die Schnittstelle (6) zur drahtlosen Datenübertragung luftdicht und/oder wasserdicht umgibt.

8. Spektrometer (1) nach einem der Ansprüche 1 bis 7, **dadurch gekennzeichnet, dass** das Gehäuse (2) an seiner Außenseite einen Aufprallschutz (16) aufweist.

9. Spektrometer (1) nach einem der Ansprüche 1 bis 8, **dadurch gekennzeichnet, dass** das Gehäuse (2) eine maximale Abmessung von 3 cm bis 12 cm aufweist.

10. Spektrometer (1) nach einem der Ansprüche 1 bis 9, **dadurch gekennzeichnet, dass** die autarke Energieversorgungseinheit (5) eine thermoelektrische Energieversorgungseinheit ist.

11. System zur qualitativen und/oder quantitativen Erfassung von chemischen Substanzen in einem Haushaltsgerät, umfassend ein Spektrometer (1) nach einem der Ansprüche 1 bis 10 und mindestens ein wasserführendes Haushaltsgerät.

12. Verfahren zum Betrieb des Systems nach Anspruch 11 zur qualitativen und/oder quantitativen Erfassung von chemischen Substanzen in einem Haushaltsgerät, wobei das Verfahren die folgenden Schritte umfasst:
(i) Vermessen eines Messobjekts (13,22) mit dem Spektrometer (1), indem von der mindestens einen Strahlungsquelle (3) Strahlung (17) in einem Wellenlängenbereich von λ₁ bis λ₂ in mindestens einem Zeitintervall Δτ emittiert wird, so dass das Messobjekt (13,22) damit beaufschlagt wird, und der mindestens eine Strahlungsdetektor (4) die von dem Messobjekt (13,22) reflektierte Strahlung und/oder transmittierte Strahlung (18) als Messsignal oder Messsignale registriert;
(ii1) Übermitteln des im Schritt (i) erhaltenen Messsignals oder der erhaltenen Messsignale an die interne Auswerteeinrichtung (7) und Auswerten des Messsignals oder der Messsignale mit einer in der internen Auswerteeinrichtung (7) hinterlegten Auswerteroutine in Hinblick auf eine quantitative und/oder qualitative Bestimmung mindestens einer chemischen Substanz im Messobjekt (13,22) als Auswertungsergebnis; und/oder
(ii2) Übermitteln des im Schritt (i) erhaltenen Messsignals oder der erhaltenen Messsignale an eine externe Auswerteeinrichtung (8), die mit einem externen Server (19) kommuniziert, und Auswerten des Messsignals und der Messsignale auf dem Server mit einer im Server hinterlegten Auswerteroutine in Hinblick auf eine quantitative und/oder qualitative Bestimmung mindestens einer chemischen Substanz des Messobjekts als Auswertungsergebnis; und
(iii) Übermitteln des Auswertungsergebnisses aus Schritt (ii1) und/oder Schritt (ii2) an die Steuereinrichtung des mindestens einen Haushaltsgeräts, welche in Abhängigkeit vom Auswertungsergebnis eine Maßnahme durchführt;
und wobei die Schritte (i) bis (iii) einmal oder mehrmals durchgeführt werden.

## Claims

1. Spectrometer (1), comprising a housing (2), at least one radiation source (3), at least one radiation detector (4), an autonomous energy supply unit (5) and
an interface (6) for wireless data transmission; wherein the housing encloses the at least one radiation source, the at least one radiation detector and the autonomous energy supply unit and the spectrometer (1) is designed
(a) to evaluate data obtained from the radiation detector (4) in an internal evaluation unit (7) and/or an external evaluation unit (8); and
(b) to communicate wirelessly, directly or indirectly, with at least one household appliance
wherein the at least one household appliance is a water-conducting household appliance for cleaning and/or drying articles, the housing can be used in the drum of the water-conducting household appliance and has the most regular surface possible in order to be able to follow movement in the drum of the water-conducting household appliance, comprising a round shape such as a sphere and another ellipsoid, a regular polyhedron, as well as hybrids of round shapes and regular polyhedra,
and the housing (2) has at least one opening (11) to a cavity (12) in the housing, the at least one opening allows a substance exchange with the environment of the spectrometer, and
the radiation source (3) and the radiation detector (4) is arranged so that a measurement object (13) present in the cavity (12) can be examined using the spectrometer (1) in a reflection mode and/or in a transmission mode.

2. Spectrometer (1) according to claim 1, **characterised in that** the housing (2) has at least one flattened partial surface (9).

3. Spectrometer (1) according to claim 1 or 2, **characterised in that** the housing (2) encloses a sensor (10) selected from the set comprising a temperature sensor, a pressure sensor, an acceleration sensor, and a humidity sensor.

4. Spectrometer (1) according to one of claims 1 to 3, **characterised in that** the housing (2) has at least one radiation-permeable partial surface (9).

5. Spectrometer (1) according to one of claims 1 to 4 **characterised in that** the housing (2) has a first opening (11) and a second opening (14) and the cavity (12) is located between the first and second openings.

6. Spectrometer (1) according to one of claims 1 to 5 **characterised in that** it contains an optical mirror (15).

7. Spectrometer (1) according to one of claims 1 to 6 **characterised in that** the housing (2) encloses the radiation source (3), the radiation detector (4), the autonomous energy supply unit (5) and the interface (6) for wireless data transmission in an airtight and/or watertight manner.

8. Spectrometer (1) according to one of claims 1 to 7 **characterised in that** the housing (2) has an impact protection system (16) on its outside.

9. Spectrometer (1) according to one of claims 1 to 8 **characterised in that** the housing (2) has a maximum dimension of 3 cm to 12 cm.

10. Spectrometer (1) according to one of claims 1 to 9 **characterised in that** the autonomous energy supply unit (5) is a thermoelectric energy supply unit.

11. System for the qualitative and/or quantitative detection of chemical substances in a household appliance, comprising a spectrometer (1) according to one of claims 1 to 10 and at least one water-conducting household appliance.

12. Method for operating the system according to claim 11 for the qualitative and/or quantitative detection of chemical substances in a household appliance,
wherein the method comprises the following steps:
(i) measuring a measurement object (13, 22) using the spectrometer (1), in that radiation (17) in a wavelength range of λ₁ to λ₂ is emitted from the at least one radiation source (3) in at least one time interval Δτ, so that the measurement object (13, 22) is exposed to it, and the at least one radiation detector (4) registers the radiation reflected and/or transmitted (18) by the measurement object (13, 22) as a measurement signal or measurement signals;
(ii1) transmitting the measurement signal or measurement signals obtained in step (i) to the internal evaluation facility (7) and evaluating the measurement signal or measurement signals using an evaluation routine stored in the internal evaluation facility (7) with regard to a quantitative and/or qualitative determination of at least one chemical substance in the measurement object (13, 22) as an evaluation result; and/or
(ii2) transmitting the measurement signal or measurement signals obtained in step (i) to an external evaluation facility (8), which communicates with an external server (19), and evaluating the measurement signal and measurement signals on the server using an evaluation routine stored in the server with regard to a quantitative and/or qualitative determination of at least one chemical substance of the measurement object as an evaluation result; and
(iii) transmitting the evaluation result from step (ii1) and/or step (ii2) to the control facility of the at least one household appliance, which performs a measure as a function of the evaluation result;
and wherein steps (i) to (iii) are performed one or more times.

## Revendications

1. Spectromètre (1) comprenant un boîtier (2), au moins une source de rayonnement (3), au moins un détecteur de rayonnement (4), une unité autonome d'alimentation en énergie (5) et une interface (6) destinée à la transmission de données sans fil, dans lequel le boîtier entoure l'au moins une source de rayonnement, l'au moins un détecteur de rayonnement et l'unité autonome d'alimentation en énergie, et dans lequel le spectromètre (1) est configuré pour
(a) évaluer, dans une unité d'évaluation interne (7) et/ou une unité d'évaluation externe (8), les données obtenues par le détecteur de rayonnement (4) pour le rayonnement détecté, et
(b) pour communiquer sans fil directement ou indirectement avec au moins un appareil ménager,
dans lequel l'au moins un appareil ménager est un appareil ménager à circulation d'eau pour le nettoyage et/ou le séchage d'objets, dans lequel le boîtier est insérable dans le tambour de l'appareil ménager à circulation d'eau et a une surface si possible régulière afin de pouvoir faire aussi des mouvements dans le tambour de l'appareil ménager à circulation d'eau, comprenant une forme ronde, telle une boule ou un quelconque ellipsoïde, un polyèdre régulier, ainsi que des formes mixtes entre des formes rondes et des polyèdres réguliers, et dans lequel le boîtier (2) comprend au moins une ouverture (11) vers un espace creux (12) dans le boîtier, dans lequel l'au moins une ouverture permet un échange de substances avec les environs du spectromètre, et dans lequel la source de rayonnement (3) et le détecteur de rayonnement (4) sont disposés de manière à ce qu'un objet de mesure (13) se trouvant dans l'espace creux (12) puisse être examiné par le spectromètre (1) dans un mode de réflexion et/ou dans un mode de transmission.

2. Spectromètre (1) selon la revendication 1, **caractérisé en ce que** le boîtier (2) présente au moins une surface partielle (9) aplatie.

3. Spectromètre (1) selon la revendication 1 ou 2, **caractérisé en ce que** le boîtier (2) entoure un capteur (10) sélectionné dans le groupe constitué d'un capteur de température, d'un capteur de pression, d'un capteur d'accélération et d'un capteur d'humidité.

4. Spectromètre (1) selon l'une quelconque des revendications 1 à 3, **caractérisé en ce que** le boîtier (2) présente au moins une surface partielle (9) perméable au rayonnement.

5. Spectromètre (1) selon l'une quelconque des revendications 1 à 4, **caractérisé en ce que** le boîtier (2) présente une première ouverture (11) et une deuxième ouverture (14) et **en ce que** l'espace creux (12) se trouve entre la première et la deuxième ouvertures.

6. Spectromètre (1) selon l'une quelconque des revendications 1 à 5, **caractérisé en ce qu'**il comprend un miroir optique (15).

7. Spectromètre (1) selon l'une quelconque des revendications 1 à 6, **caractérisé en ce que** le boîtier (2) entoure, de manière étanche à l'air et/ou étanche à l'eau, la source de rayonnement (3), le détecteur de rayonnement (4), l'unité autonome d'alimentation en énergie (5) et l'interface (6) destinée à la transmission de données sans fil.

8. Spectromètre (1) selon l'une quelconque des revendications 1 à 7, **caractérisé en ce que** le boîtier (2) présente un dispositif de protection contre les chocs (16) sur son côté extérieur.

9. Spectromètre (1) selon l'une quelconque des revendications 1 à 8, **caractérisé en ce que** le boîtier (2) présente une dimension maximale de 3 cm à 12 cm.

10. Spectromètre (1) selon l'une quelconque des revendications 1 à 9, **caractérisé en ce que** l'unité autonome d'alimentation en énergie (5) est une unité d'alimentation en énergie thermoélectrique.

11. Système destiné à la détection qualitative et/ou quantitative de substances chimiques dans un appareil ménager, comprenant un spectromètre (1) selon l'une quelconque des revendications 1 à 10 et au moins un appareil ménager à circulation d'eau.

12. Procédé de fonctionnement du système selon la revendication 11, destiné à la détection qualitative et/ou quantitative de substances chimiques dans un appareil ménager, le procédé comprenant les étapes suivantes :
(i) mesure d'un objet de mesure (13, 22) avec le spectromètre (1), du fait qu'un rayonnement (17) est émis dans une plage de longueur d'onde de λ₁ à λ₂ dans au moins un intervalle de temps Δτ par l'au moins une source de rayonnement (3), de sorte que l'objet de mesure (13, 22) en est alimenté, et que l'au moins un détecteur de rayonnement (4) enregistre le rayonnement réfléchi par l'objet de mesure (13, 22) et/ou le rayonnement transmis (18) en tant que signal de mesure ou signaux de mesure ;
(ii1) transmission, au dispositif d'évaluation interne (7), du signal de mesure obtenu à l'étape (i) ou des signaux de mesure obtenus, et évaluation du signal de mesure ou des signaux de mesure avec une routine d'évaluation mémorisée dans le dispositif d'évaluation interne (7) au regard d'une détermination quantitative et/ou qualitative au moins d'une substance chimique dans l'objet de mesure (13, 22) en tant que résultat d'évaluation ; et/ou
(ii2) transmission, à un dispositif d'évaluation externe (8), du signal de mesure obtenu à l'étape (i) ou des signaux de mesure obtenus, lequel dispositif d'évaluation externe communique avec un serveur externe (19), et évaluation du signal de mesure et des signaux de mesure sur le serveur avec une routine d'évaluation mémorisée sur le serveur au regard d'une détermination quantitative et/ou qualitative au moins d'une substance chimique de l'objet de mesure en tant que résultat d'évaluation ; et
(iii) transmission du résultat d'évaluation provenant de l'étape (ii1) et/ou de l'étape (ii2) au dispositif de commande de l'au moins un appareil ménager, lequel dispositif de commande exécute une mesure en fonction du résultat d'évaluation ;
et dans lequel les étapes (i) à (iii) sont exécutées une fois ou plusieurs fois.
